# FASCICULE DE BREVET EUROPEEN

(11) **EP 2 621 319 B1**
(45) Date de publication et mention de la délivrance du brevet: **25.03.2015**
(21) Numéro de dépôt: 11773749.4
(22) Date de dépôt: 23.09.2011
(51) Int. Cl.: A47J 37/06

(54) **APPAREIL ÉLECTROMÉNAGER A ÉLÉMENT DÉCORATIF RAPPORTÉ**
ELEKTRISCHES HAUSHALTSGERÄT MIT EINEM DEKORATIVEN EINSATZELEMENT
ELECTRIC HOUSEHOLD APPLIANCE HAVING A DECORATIVE INSERT ELEMENT

(30) Priorité: 27.09.2010 FR 1057776
(43) Date de publication de la demande: 07.08.2013
(73) Titulaire: SEB S.A., 69130 Ecully (FR)
(72) Inventeur: MOINE, Olivier, F-73100 Gresy Sur Aix (FR)
(74) Mandataire: Novagraaf Technologies
(86) Numéro de dépôt international: PCT/FR2011/052206
(87) Numéro de publication internationale: WO 2012/045948

(56) Documents cités:
- EP-A1- 2 027 802
- CN-Y- 201 131 094
- US-A1- 2007 210 195

## Description

L'invention concerne un appareil électroménager à élément décoratif. Un appareil de ce type est connu du document CN101551187.

Plus précisément, l'invention concerne un appareil électroménager comprenant un corps, des première et seconde cavités ouvertes sur l'extérieur du corps et au moins un élément décoratif flexible rapporté, allongé et disposé autour d'une zone à décorer du corps. Cet élément décoratif présente deux extrémités opposées suivant son allongement et comprenant des première et seconde parties de fixation engagées respectivement dans les première et seconde cavités.

On retrouve de nos jours nombre de ces appareils électroménagers munis d'un tel habillage.

Cependant, ils présentent des inconvénients concernant notamment la fixation entre le corps et l'élément décoratif. Par exemple, les solutions sont chères, délicates à fabriquer et/ou à disposer et bloquer. Ces solutions sont également trop aisément accessibles une fois l'assemblage réalisé. Elles ne sont pas camouflables, n'assurent pas un assemblage précis, et ne sont pas prévues pour une possible mise en tension de l'élément décoratif ou des moyens permettant de le retenir. A cela s'ajoute qu'une fois l'élément décoratif placé autour de la zone à décorer du corps, afin de l'y bloquer, il est nécessaire de réaliser la mise en place lors de l'assemblage général de l'appareil ou avant, en préparation des sous-ensembles que comprend l'appareil.

Afin d'apporter une solution à tout ou partie de ces inconvénients, la première ou seconde partie de fixation est maintenue bloquée dans la cavité par des moyens de retenue retenant l'élément décoratif, ces moyens de retenue cachés dans la première et seconde cavités étant élastiquement déformables et sous tension ou engagés avec la première ou seconde partie de fixation de sorte à mettre sous tension suivant sa longueur l'élément décoratif ainsi plaqué vers la zone à décorer.

Ainsi, le montage de l'élément décoratif peut avoir lieu lors de l'assemblage général de l'appareil, ou après. Un tel blocage de l'élément décoratif sous tension ou du moyen élastique sous tension assure un rattrapage de jeu permettant d'absorber des variations géométriques de pièces (du corps en particulier) dues au processus industriel de fabrication.

Selon un premier mode de réalisation de l'invention, on prévoit que les moyens de retenue sont élastiquement déformables, la première et seconde parties de fixation comprenant au moins une ouverture permettant aux moyens de retenue de maintenir tendu l'élément décoratif autour de la zone à décorer.

Ainsi, grâce à des ouvertures prévues pour l'élément décoratif coopérant avec ce moyen élastique, on obtient un rattrapage de jeu de manière simple et efficace.

Selon une caractéristique importe de ce mode de réalisation, les moyens de retenue comportent un ressort caché dans la première ou seconde cavité, le ressort comportant des crochets à chacune de ses extrémités engagés chacun avec au moins une ouverture des première et seconde parties de fixation.

L'utilisation d'un tel ressort ainsi sollicité est peu coûteux et l'assemblage rapide avec l'élément décoratif permet un gain de temps.

Selon un deuxième mode de réalisation de l'invention, les moyens de retenue engagés mettent sous tension, suivant sa longueur, l'élément décoratif, la première partie de fixation emboitée dans la première cavité comporte une première patte retenue par une butée simple cachée dans la première cavité de manière à résister à une traction exercée par l'emboîtement d'une seconde patte de la seconde partie de fixation bloquée sous tension par engagement entre des crans échelonnés dans la seconde cavité.

Selon un troisième mode de réalisation, les moyens de retenue engagés mettent sous tension suivant sa longueur l'élément décoratif, la première partie de fixation comportant une ouverture retenue par un crochet caché dans la première cavité de manière à résister à une traction exercée par l'emboîtement d'une seconde patte de la partie de fixation bloquée sous tension par engagement entre des crans échelonnés dans la seconde cavité.

Selon encore un quatrième mode de réalisation, les moyens de retenue engagés mettent sous tension suivant sa longueur l'élément décoratif, la première partie de fixation comporte au moins une ouverture retenue par un crochet caché dans la première cavité de manière à résister à une traction exercée par la seconde partie de fixation qui comporte au moins une ouverture bloquée sous tension par engagement avec un crochet dans la seconde cavité.

Selon encore un cinquième mode de réalisation, les moyens de retenue engagés mettent sous tension suivant sa longueur l'élément décoratif, la première partie de fixation emboitée dans la première cavité comporte une première patte retenue par une butée simple cachée dans la première cavité de manière à résister à une traction exercée par la seconde partie de fixation qui comporte au moins une ouverture bloquée sous tension par engagement avec un crochet de la seconde cavité.

D'autres modes de réalisation sont bien sûr possibles, grâce à tous moyens adéquats pour l'engagement ou l'emboîtement des premières et/ou secondes parties de fixation dans les premières et secondes cavités du corps.

Par souci de rapidité d'assemblage, de réduction des coûts, sans nuire à la performance de l'ajustage ni au rattrapage de jeu, on prévoit que la seconde patte soit située à l'endroit d'une zone de l'élément décoratif qui est élastiquement flexible et est sollicitée vers les crans échelonnés par réaction à un appui contre une partie du corps.

Si une cavité de relativement grandes dimensions peut être réalisée dans le corps pour recevoir l'élément décoratif, on prévoit que la zone flexible de l'élément décoratif où est située la seconde patte présente une extrémité repliée par laquelle est réalisé l'appui ci-dessus. Il s'agit là d'une solution facile à fabriquer et à monter.

Pour simplifier la forme de l'élément décoratif vers ladite seconde patte, une alternative propose que cette zone flexible de l'élément décoratif présente une extrémité sensiblement droite qui s'appuie contre une partie du corps, à l'endroit d'une paroi sensiblement parallèle, ou oblique, par rapport à la direction d'échelonnement des crans.

Ceci doit permettre de réduire les dimensions de la cavité réceptrice, dans le corps.

Pour une rapidité de montage et/ou une réduction de coût, on recommande dans ce cas que la partie du corps contre laquelle s'appuie ladite extrémité sensiblement droite soit une pièce rapportée qui comprend les crans échelonnés précités de mise en tension.

Nonobstant la satisfaction de tout ou partie des inconvénients susmentionnés, on prévoit favorablement un rattrapage de jeu très performant, de même le montage et la mise en tension, avec une zone à décorer du corps qui sera convexe vers l'extérieur et une flexibilité de l'élément décoratif qui sera adaptée pour qu'il épouse cette convexité lorsqu'il est disposé et bloqué autour de cette zone.

Pour une bonne qualité de l'assemblage, à nouveau à coût réduit, on prévoit aussi qu'à l'endroit ou à proximité immédiate des première et seconde cavités ouvertes, le corps soit renflé vers l'extérieur sur une épaisseur de l'ordre de celle de l'élément décoratif à cet endroit, de manière que, bloqué autour du corps, l'élément décoratif rapporté affleure alors sensiblement ledit renflement.

Pour faciliter le processus industriel de fabrication et/ou de montage, en favorisant la performance de tenue sous tension, une autre caractéristique prévoit que les première et seconde pattes appartiennent à l'élément décoratif et sont dirigées transversalement l'une par rapport à l'autre.

Pour le même objectif, encore une autre caractéristique prévoit que la première cavité soit ouverte sur l'extérieur dans la direction reliant les première et seconde parties de fixation de l'élément décoratif et présente une forme en chicane qui contourne une paroi transversale par rapport à ladite direction et derrière laquelle la première patte cachée et emboîtée suivant ladite direction, et engageable par rotation.

De préférence, la première patte cachée présente alors une extrémité libre et la paroi transversale est liée au corps suivant deux directions transversales.

Encore pour une bonne qualité de l'assemblage, à nouveau à coût réduit, en particulier en terme de fabrication, on prévoit aussi que les première et seconde pattes cachées soient monoblocs avec l'élément décoratif et la seconde patte est un pli de cet élément.

D'autres objets et avantages de l'invention apparaîtront au cours de la description qui suit, fournie à titre d'exemple de réalisation et faite en référence aux dessins annexés, dans lesquels :
- les figures 1 et 2 montrent un exemple d'appareil suivant deux vues de côté ;
- les figures 3 et 4 présentent une vue de dessous d'un appareil comportant un élément de retenue élastiquement déformable dans les cavités ouvertes du corps ;
- la figure 5 est une vue de l'élément de fixation selon un premier mode de réalisation ;
- la figure 6 est vue d'une des extrémités de fixation montrant l'emboîtement, avec retenue, dans une première cavité ouverte du corps, selon un deuxième et cinquième modes de réalisation ;
- les figures 7 et 8 montrent un élément décoratif flexible, en vue locale agrandie, selon le deuxième mode de réalisation ;
- les figures 9 et 10 montrent une partie de l'appareil en vue de 3/4 par-dessous, sans puis avec un élément décoratif en place, selon le deuxième et un troisième mode de réalisation ;
- la figure 11 détaille, par une vue de dessous du corps, l'emboîtement de la seconde extrémité d'un élément décoratif dans une seconde cavité ouverte du corps, selon le deuxième et troisième mode de réalisation ;
- la figure 12 illustre une variante pour cette extrémité ;
- la figure 13 schématise une alternative de réalisation d'une extrémité d'un élément décoratif ;
- la figure 14 détaille une forme préférée de la paroi de camouflage, ci-après repérée 25 ;
- la figure 15 illustre une vue d'un élément décoratif selon le troisième mode de réalisation ;
- la figure 16 est une vue d'un élément décoratif selon un quatrième mode de réalisation ;
- la figure 17 est une vue d'un élément décoratif selon un cinquième mode de réalisation ; et,
- la figure 18 illustre la fixation d'une première partie de fixation d'un élément décoratif selon un troisième et quatrième mode de réalisation.

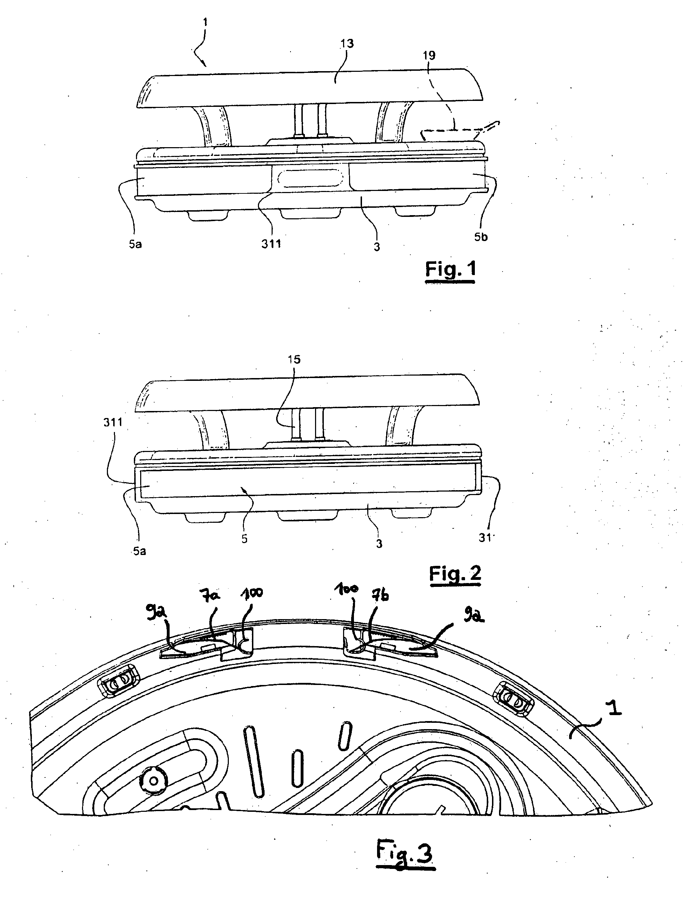

Les Figures 1 et 2 présentent donc un exemple d'appareil électroménager 1 comprenant un corps 3 et au moins un élément décoratif flexible 5 rapporté sur celui-ci.

De manière générale, l'appareil 1 présente des première et seconde cavités 9a, 9b ouvertes sur l'extérieur du corps 3.

L'élément décoratif flexible 5 présente une forme allongée. Il peut être constitué d'une seule pièce montée autour du corps 3 de l'appareil 1, ou constitué de deux pièces, tels deux éléments décoratifs distincts 5a, 5b rapportés autour du corps 3. Dans le cas de deux éléments décoratifs 5a, 5b, ces derniers peuvent être identiques.

Dans le cadre de la présente invention, on considérera les réalisation et fixation essentiellement d'un seul de ces éléments décoratifs 5, 5a, 5b.

L'élément décoratif 5, 5a, 5b est disposé autour d'une zone 300 périphérique à décorer du corps 3 et bloqué ainsi par des moyens de retenue prévus en partie sur le corps 3 (ou un élément de celui-ci, bloqué sur lui) et en partie sur l'élément décoratif 5, 5a, 5b. Les moyens de retenue du corps 3 coopérant avec l'élément décoratif 5, 5a, 5b peuvent être différents.

L'élément décoratif 5, 5a, 5b présente également deux extrémités opposées suivant son allongement qui comprennent des première 7a et seconde 7b partie de fixation engagées respectivement dans la première et seconde cavité 9, 9a, 9b.

Selon l'invention, la première 7a ou seconde partie 7b de fixation est maintenue bloquée dans la cavité 9, 9a, 9b, par les moyens de retenue retenant l'élément décoratif 5, 5a, 5b. Ces moyens de retenue cachés dans les première et seconde cavités 9, 9a, 9b étant soit élastiquement déformables et sous tension, soit engagés avec la première 7a ou seconde 7b partie de fixation de sorte à mettre sous tension suivant toute sa longueur l'élément décoratif 5, 5a, 5b ainsi plaqué vers la zone à décorer (300).

Les figures 3, 4 et 5 illustrent un premier mode de réalisation de l'invention dans lequel les moyens de retenue sont élastiquement déformables. On voit que pour la fixation de l'élément décoratif 5, 5a, 5b, les première 7a et seconde 7b parties de fixation comportent au moins une ouverture 8 permettant aux moyens de retenue de maintenir tendu l'élément décoratif 5, 5a, 5b autour de la zone à décorer 300. Ces moyens de retenue peuvent comporter, par exemple, un ressort 10 qui se trouve caché dans la première 9a ou seconde 9b cavité.

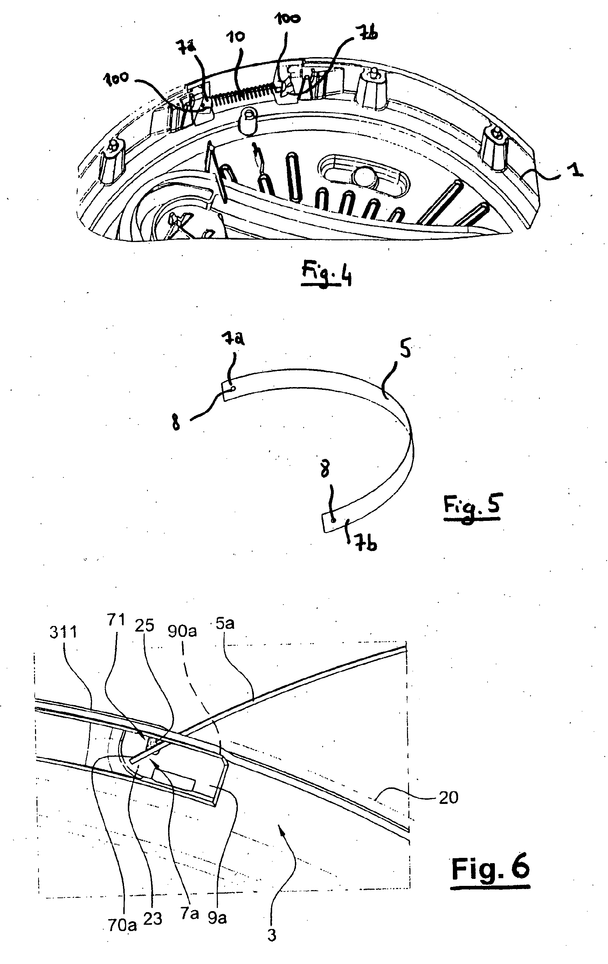

Comme on peut le voir sur la figure 4, le ressort 10 comporte à chacune de ses extrémités des crochets 100 ou boucles destinés à s'engager chacun avec une des ouvertures 8 des parties 7a, 7b de fixation. De cette manière, un seul élément décoratif 5, 5a, 5b est plaqué contre toute la zone à décorer du corps 3, cet élément 5, 5a, 5b étant maintenu par le ressort 10 sous tension à chacune de ses partie de fixation 7a, 7b.

De préférence, ce ressort 10 est du type ressort de traction. Ainsi, l'utilisation d'un tel ressort 10 sous tension lorsqu'engagé avec l'élément décoratif permet de maintenir celui-ci en équilibre et plaqué autour de l'appareil de sorte à rattraper le jeu.

Selon les différents modes de réalisation qui vont suivre, les premières 7a et secondes 7b parties de fixation de l'élément décoratif 5, 5a, 5b sont engagées ou emboités avec les moyens de retenue pour mettre sous tension suivant sa longueur l'élément décoratif 5, 5a, 5b.

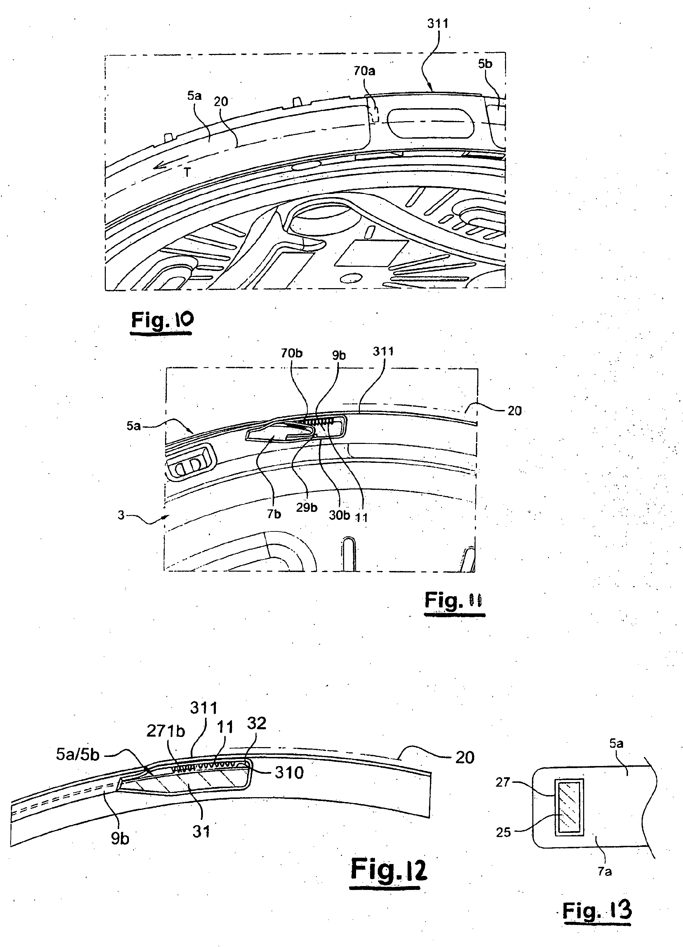

Selon un deuxième mode de réalisation illustré sur les figures 6 à 10, on voit que pour la fixation, une première partie 7a de fixation d'un élément décoratif emboîtée dans la première cavité 9a ouverte sur l'extérieur du corps 3 où elle est retenue par une première patte cachée 70a. Cette dernière est retenue par une butée simple 71 cachée dans la première cavité 9a. Cet emboîtement avec retenue permet à l'élément décoratif de résister à une traction T (figure 10) exercée par l'emboîtement d'une seconde patte 70b de la seconde partie 7b de fixation de ce même élément décoratif dans la seconde cavité 9b, où la seconde partie de fixation 7b est bloquée sous tension par engagement entre des crans échelonnés 11, comme on peut le voir sur la figure 11. Les crans échelonnés 11 engagés avec cette seconde patte 70b sont cachés à la vue extérieure de l'appareil électroménager 1. Les crans échelonnés 11 définissent alors un moyen de mise en tension réglable.

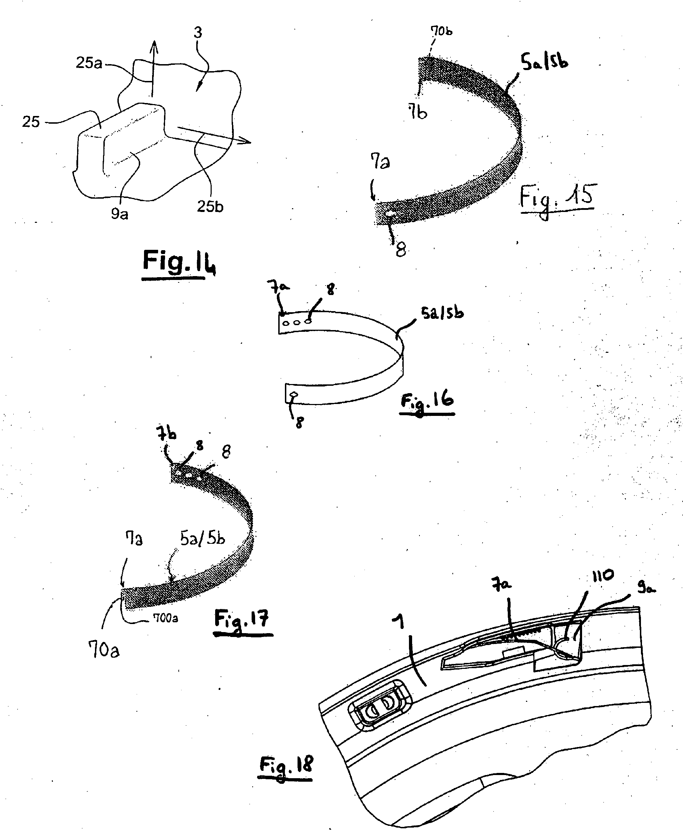

Selon un troisième mode de réalisation comprenant un exemple de l'élément décoratif 5, 5a, 5b illustré sur la figure 15, on peut voir que la première 7a partie de fixation comporte au moins une ouverture 8 retenue par un crochet 110 caché dans la première cavité 9a (voir figure 18) de manière à résister à une traction T exercée par l'emboîtement d'une seconde patte 70b de la partie de fixation bloquée sous tension par engagement entre des crans échelonnés 11 dans la seconde cavité 9b. Le crochet 110 localisé dans la première cavité 9a peut être réalisé lors de la fabrication de l'appareil électroménager. Il peut encore être une pièce rapportée solidarisée à l'appareil au moyen de vissage, soudage, ou autre. Ces crochets 110 peuvent également présenter toute forme lui permettant de s'engager avec l'ouverture 8 que comporte la première partie de fixation 7a.

Selon un quatrième mode de réalisation comprenant un exemple de l'élément décoratif 5, 5a, 5b illustré sur la figure 16, les première 7a et seconde 7b parties de fixation comportent chacune au moins une ouverture 8. De préférence, la première 7a partie de fixation comporte une ouverture et la seconde 7b partie de fixation peut en comporter, par exemple, plusieurs, ici trois ouvertures 8. Les ouvertures 8 sont retenues par un crochet 110 caché dans les première 9a et seconde 9b cavités. L'engagement de l'ouvertures 8 de la première 7a partie de fixation avec un crochet 110 monté dans la première cavité 9a permet de résister à une traction T exercée par la seconde 7b partie de fixation bloquée sous tension par engagement d'une des ouvertures 8 avec un crochet 110 localisé dans la seconde cavité 9b. Comme vu précédemment, la seconde 7b partie de fixation peut comporter plusieurs ouvertures 8 disposées successivement à une distance régulière des unes des autres de sorte à permettre le réglage de l'élément décoratif sur la zone 300 du corps à décorer. Les crochets 110 peuvent être réalisés et/ou présenter les mêmes caractéristiques que dans le troisième mode de réalisation susmentionné.

Selon encore un cinquième mode de réalisation comprenant un exemple de l'élément décoratif 5, 5a, 5b illustré sur la figure 17, la première 7a partie de fixation comporte une première patte 70a retenue par une butée simple 71 cachée dans la première cavité 9a de manière à résister à une traction T exercée par la seconde 7b partie de fixation qui comporte au moins une ouverture 8 bloquée sous tension par engagement avec un crochet 110 monté dans la seconde cavité 9b. La deuxième partie de fixation 7b peut comporter les mêmes ouvertures 8 présentées dans le quatrième mode de réalisation ci-dessus. De même, les crochets 110 peuvent être réalisés ou présenter les caractéristiques susmentionnées.

Dans les modes de réalisation deux à cinq, lors de l'assemblage emboîté ou engagé entre l'élément décoratif 5, 5a, 5b et la partie concernée du corps 3, les deux emboîtements ou engagements sont réalisés à contre-sens l'un de l'autre. La traction T est exercée suivant une direction générale 20 qui passe par les deux parties de fixation 7a, 7b et les cavités 9a, 9b.

Dans la présente invention, les éléments décoratifs 5, 5a, 5b, sont allongées suivant cette direction générale 20, pour définir ensemble un cerclage du corps qui est quasi complet, sauf à l'endroit des deux zones opposées 311 du corps 3.

Sur les figures 1, 2 à 4, 9 et 10 notamment, on voit que la zone à décorer du corps 3 recouverte par le ou chaque élément décoratif est convexe vers l'extérieur, ici de forme arrondie. La flexibilité de l'élément décoratif 5, 5a, 5b est adaptée pour qu'il épouse cette convexité lorsqu'il est disposé et bloqué autour de cette zone. La mise en tension de l'élément décoratif 5, 5a, 5b ou du ressort 10, par exemple, permet un tel résultat, tout en assurant un rattrapage des jeux nés de la fabrication ou de l'assemblage des pièces plus intérieures du corps 3.

On pourrait prévoir que, dans les deuxième et cinquième modes de réalisation, la première patte 70a et la première cavité 9a soient réalisées comme les seconde patte 70b et seconde cavité 9b, pour qu'il y ait mise en tension suivant la direction 20, par double engagement cranté à contre-sens.

De même, il serait envisageable, dans les troisième et quatrième modes de réalisation, que les premières parties de fixation et les premières cavités 9a soient réalisées de manière identique aux secondes 7b parties de fixation et secondes cavités 9b définissant des moyens réglables.

Toutefois, on conseille que l'élément décoratif 5, 5a, 5b (pour les modes de réalisation deux à cinq) soit bloqué par engagement ou emboîtement sous tension uniquement à l'endroit de ladite seconde partie de fixation 7b, et non de la première, où, comme on le comprend au vu des figures, les premières 7a parties de fixations cachées 7a sont retenues grâce aux moyens de fixation (première patte 70a, ouverture 8) par les moyens de retenue (butée simple 71, crochet 110).

La butée simple 71, décrite dans les deuxième et troisième modes de réalisation, (où il n'y a donc pas de moyen de mise en tension réglable) est réalisée, à l'endroit de la première cavité 9a, par la présence d'une forme en chicane 23 qui contourne une paroi 25 transversale par rapport à ladite direction 20 et derrière laquelle la première patte cachée 70a, emboîtée là suivant cette direction 20, a été engagée par rotation, comme illustré sur la figure 6. On aura remarqué que la première cavité 9a est ouverte sur l'extérieur, en 90a, dans la direction 20, l'engagement de la première partie de fixation 7a, et ici de la première patte cachée 70a, s'étant opéré suivant cette direction ; de même d'ailleurs ici côté opposé, pour la seconde cavité 9b et la seconde partie de fixation 7b.

La première partie de fixation 7a pourrait présenter une ouverture 27 comme présenté figure 10 dans laquelle s'engagerait la paroi 25, la première patte cachée 70a ayant alors une forme fermée.

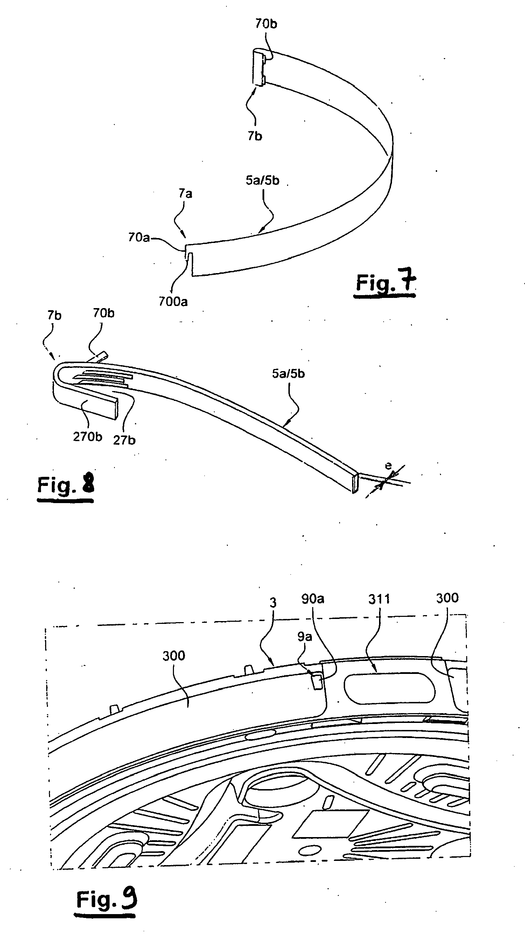

Concernant la première patte cachée 70a, on peut toutefois conseiller que celle-ci, au moins pour une facilité de fabrication et de mise en place, présente une extrémité libre 700a (figures 7 et 17) et que la paroi transversale 25 soit liée au corps 3 suivant deux directions transversales, ici 25a, 25b (figure 14). Ainsi, la première patte 70a présente une forme de crochet qui, lors de l'emboîtement, passe par-dessus la paroi 25 et se trouve donc cachée dans le fond de la cavité 9a, derrière elle. On pourrait imaginer intervertir les formes coopérantes de fixation entre le corps et l'élément décoratif considéré (excroissance transversale sur le second et passage traversant la recevant, dans le premier, par exemple, ou crans 11 sur l'élément décoratif).

Concernant maintenant la seconde patte 70b (figures 7, 8 et 15), on voit que celle-ci est située à l'endroit d'une zone 27b de l'élément décoratif qui est élastiquement flexible et est sollicitée vers les crans échelonnés 11 (figure 11), par réaction à un appui 29b contre une partie 30b du corps 3. La réaction est dirigée en travers par rapport à la direction 20. Ici, les crans 11 sont donc portés par le corps 3, la seconde patte 70b appartenant à l'élément décoratif 5, 5a, 5b considéré.

Sur la figure 8, la zone flexible 27b de l'élément décoratif où est située la seconde patte 70b, selon le deuxième et troisième mode de réalisation, présente une extrémité repliée 270b par laquelle est réalisé l'appui ci-dessus.

Cette zone flexible 27b, illustré en particulier sur la figure 12, est formée par une extrémité flexible, sensiblement droite 271b de l'élément décoratif 5, 5a, 5b qui s'appuie contre une partie 31 du corps 3, à l'endroit d'une paroi 310 sensiblement parallèle à la direction 20 d'échelonnement des crans 11. La paroi pourrait être légèrement oblique (pointillés 310a).

Pour résoudre un problème d'encombrement, la partie précitée 31 du corps 3 contre laquelle s'appuie cette extrémité sensiblement droite 271b est une pièce rapportée qui comprend les crans échelonnés 11 et l'espace 32 de réception de cette extrémité 271b.

Avec les figures 7, 8, 15 et 17 on remarquera que les première 70a et seconde 70b pattes cachées, appartiennent à l'élément décoratif, ici 5a, et sont dirigées transversalement l'une par rapport à l'autre. Cette disposition favorise une mise en place pratique et un maintien efficace, tout en simplifiant la fabrication, et cela d'autant plus si ces première 70a et secondes 70b pattes sont monoblocs avec l'élément décoratif. La seconde patte 70b est formée par au moins un pli de l'élément décoratif, comme illustré.

L'appareil électroménager 1 est ici un appareil de cuisson ; en l'espèce un appareil à raclette (cf. figures 1, 2). Il comprend une surface, tel un plateau 13, supérieur de cuisson ou maintien au chaud, sous lequel sont disposées une ou plusieurs résistances électriques 15. En dessous de ce plateau 13, un espace périphérique 17 ouvert sur l'extérieur et sur le pourtour latéral de l'appareil permet de poser et chauffer une série de petits poêlons 19 amovibles comme illustré sur la figue 1. Encore en dessous du plateau 13, le corps 3 de l'appareil est suffisamment éloigné de la zone de chauffe 17 pour permettre la présence d'une plaqué métallique en tant qu'élément décoratif flexible 5, 5a et/ou 5b. Il peut en particulier s'agir d'une ou plusieurs bandes d'acier de quelques dixièmes de mm d'épaisseur e. Sur la figure 4, on peut voir que ces bandes sont effectivement naturellement cintrées.

Comme on peut le comprendre avec la figure 4, l'élément décoratif rapporté 5a/5b sera favorablement flexible de manière à être déformé, a priori élastiquement, lors du blocage des moyens de fixation. L'élément décoratif rapporté est cintré.

Pour faciliter fabrication et assemblage, on recommande encore que dans l'environnement des première et seconde cavités ouvertes 9a, 9b, c'est-à-dire à l'endroit ou à proximité immédiate de celles-ci, le corps 3 soit renflé vers l'extérieur, en 311, sur une épaisseur de l'ordre de celle de l'élément décoratif à cet endroit, dé manière que, bloqué autour du corps 3, l'élément décoratif rapporté affleure sensiblement ce renflement 311.

Les deux cavités 9a, 9b peuvent n'en former qu'une en communication, par exemple pour le deuxième mode de réalisation pour en contenir le ressort. Elles comprendront alors chacune une zone pour l'engagement de l'une ou l'autre desdites parties 7a, 7b de fixation.

Sur les figures 1 et 2, on aura remarqué la présence des deux éléments décoratifs 5a, 5b formant deux parties de cerclage séparées par les deux renflements 311 extérieurs diamétralement opposés. La forme des éléments décoratifs sur les figures 5, 7, 15, 16 et 17 est d'ailleurs quasiment un demi-cercle.

## Revendications

1. Appareil électroménager (1) comprenant un corps (3), des première et seconde cavités (9, 9a, 9b) ouvertes sur l'extérieur du corps (3) et au moins un élément décoratif (5, 5a, 5b), allongé et disposé autour d'une zone (300) à décorer dudit corps (3), **caractérisé en ce que** ledit élément décoratif est flexible (5, 5a, 5b) et présente deux extrémités opposées suivant son allongement qui comprennent des première (7a) et seconde (7b) parties de fixation engagées respectivement dans la première ou seconde cavité (9, 9a, 9b), la première (7a) ou seconde partie (7b) de fixation étant maintenue bloquée dans la cavité (9, 9a, 9b) par des moyens de retenue retenant l'élément décoratif (5, 5a, 5b), ces moyens de retenue cachés dans la première et seconde cavités (9, 9a, 9b) étant :
- élastiquement déformables et sous tension; ou,
- engagés avec la première (7a) ou seconde (7b) partie de fixation de sorte à mettre sous tension suivant sa longueur l'élément décoratif (5, 5a, 5b) ainsi plaqué vers la zone à décorer (300).

2. Appareil électroménager (1), selon la revendication 1, **caractérisé en ce que** les moyens de retenue sont élastiquement déformables, la première (7a) et seconde (7b) parties de fixation comprenant au moins une ouverture (8) permettant aux moyens de retenue de maintenir tendu l'élément décoratif (5, 5a, 5b) autour de la zone à décorer (300).

3. Appareil électroménager (1), selon l'une des revendications 1 ou 2, **caractérisé en ce que** les moyens de retenue comportent un ressort (10) caché dans la première ou seconde cavité (9, 9a, 9b), ledit ressort (10) comportant des crochets (100) à chacune de ses extrémités engagés chacun avec au moins une ouverture (8) des premières (7a) et secondes (7b) parties de fixation.

4. Appareil électroménager (1), selon la revendication 1, **caractérisé en ce que** les moyens de retenue engagés mettent sous tension suivant sa longueur l'élément décoratif, la première (7a) partie de fixation, emboitée dans la première cavité (9a), comporte une première patte (70a) retenue par une butée simple (71) cachée dans la première cavité (9a), de manière à résister à une traction (T) exercée par l'emboîtement d'une seconde patte (70b) de la seconde (7b) partie de fixation bloquée sous tension par engagement entre des crans échelonnés (11) dans la seconde cavité (9b).

5. Appareil électroménager (1), selon la revendication 1, **caractérisé en ce que** les moyens de retenue engagés mettent sous tension suivant sa longueur l'élément décoratif, la première (7a) partie de fixation comporte une ouverture (8) retenue par un crochet (110) caché dans la première cavité (9a) de manière à résister à une traction (T) exercée par l'emboîtement d'une seconde patte (70b) de la partie de fixation bloquée sous tension par engagement entre des crans échelonnés (11) dans la seconde cavité (9b).

6. Appareil électroménager (1), selon la revendication 1, **caractérisé en ce que** les moyens de retenue engagés mettent sous tension suivant sa longueur l'élément décoratif, la première (7a) partie de fixation comporte au moins une ouverture (8) retenue par un crochet (110) caché dans la première cavité (9a) de manière à résister à une traction (T) exercée par la seconde (7b) partie de fixation qui comporte au moins une ouverture bloquée sous tension par engagement avec un crochet dans la seconde cavité (9b).

7. Appareil électroménager (1), selon la revendication 1, **caractérisé en ce que** les moyens de retenue engagés mettent sous tension suivant sa longueur l'élément décoratif, la première (7a) partie de fixation, emboitée dans la première cavité (9a), comporte une première patte (70a) retenue par une butée simple (71) cachée dans la première cavité (9a) de manière à résister à une traction (T) exercée par la seconde (7b) partie de fixation qui comporte au moins une ouverture (8) bloquée sous tension par engagement avec un crochet (110) dans la seconde cavité (9b).

8. Appareil électroménager (1), selon l'une des revendications 4 ou 5, **caractérisé en ce que** la seconde patte (70b) est située à l'endroit d'une zone (27b) de l'élément décoratif (5a, 5b) qui est élastiquement flexible et est sollicitée vers les crans échelonnés (11) par réaction à un appui (29a) contre une partie (30b) du corps (3).

9. Appareil électroménager (1), selon la revendication 8, **caractérisé en ce que** la zone flexible (27b) de l'élément décoratif (5a, 5b) où est située la seconde patte (70b) présente une extrémité repliée (270b) par laquelle est réalisé ledit appui (29b).

10. Appareil électroménager (1), selon la revendication 8, **caractérisé en ce que** la zone flexible (27b) de l'élément décoratif (5a, 5b) où est située la seconde patte (70b) présente une extrémité sensiblement droite (271b) qui s'appuie contre une partie (30b) du corps (3), à l'endroit d'une paroi (310) sensiblement parallèle, ou oblique, par rapport à la direction (20) d'échelonnement des crans (11).

11. Appareil électroménager (1), selon la revendication 10, **caractérisé en ce que** la partie (30b) du corps (3) contre laquelle s'appuie ladite extrémité sensiblement droite (271b) est une pièce rapportée qui comprend les crans échelonnés (11).

12. Appareil électroménager (1), selon l'une des revendications précédentes, **caractérisé en ce que** la zone (300) à décorer du corps (3) est convexe vers l'extérieur et la flexibilité de l'élément décoratif (5a, 5b) est adaptée pour qu'il épouse cette convexité lorsqu'il est disposé et bloqué autour de cette zone (300).

13. Appareil électroménager, selon l'une des revendications précédentes, **caractérisé en ce qu'**à l'endroit ou à proximité immédiate des première et seconde cavités (9a, 9b), le corps (3) est renflé vers l'extérieur (311) sur une épaisseur de l'ordre de celle de l'élément décoratif (5, 5a, 5b) à cet endroit, de manière que, bloqué autour du corps (3), l'élément décoratif (5a, 5b) rapporté affleure sensiblement ledit renflement (311).

14. Appareil électroménager (1), selon l'une des revendications 4 ou 5 ou 7 ou 8 ou 9 ou 10 , **caractérisé en ce que** les première et secondes pattes (70a, 70b) appartiennent à l'élément décoratif (5a, 5b) et sont dirigées transversalement l'une par rapport à l'autre.

15. Appareil électroménager (1), selon l'une des revendications 1, 3 à 10, **caractérisé en ce que** la première cavité (9a) est ouverte sur l'extérieur dans la direction (20) reliant les première et seconde parties (7a, 7b) de fixation de l'élément décoratif (5a, 5b) et présente une forme en chicane (23) qui contourne une paroi (25) transversale par rapport à ladite direction (20) et derrière laquelle la première patte (70a) est cachée et emboîtée suivant ladite direction (20) et engageable par rotation.

16. Appareil électroménager (1), selon l'une des revendications 4 ou 5 ou 7 à 10 ou 14 ou 15, **caractérisé en ce que** les première et seconde pattes cachées (70a, 70b) sont monoblocs avec l'élément décoratif (5a, 5b) et la seconde patte (70b) est un pli de cet élément.

## Patentansprüche

1. Elektrohaushaltsgerät (1), das einen Körper (3), einen ersten und einen zweiten offenen Hohlraum (9, 9a, 9b) auf der Außenseite des Körpers (3) und mindestens ein Zierelement (5, 5a, 5b) umfasst, das um eine zu verzierende Zone (300) des Körpers (3) herum ausgedehnt und angeordnet ist, **dadurch gekennzeichnet, dass** das Zierelement biegbar ist (5, 5a, 5b) und zwei entgegengesetzte Enden entlang seiner Ausdehnung aufweist, die einen ersten (7a) und einen zweiten (7b) Befestigungsteil umfassen, die in den ersten bzw. den zweiten Hohlraum (9, 9a, 9b) eingreifen, wobei der erste (7a) oder der zweite (7b) Befestigungsteil in dem Hohlraum (9, 9a, 9b) durch Zurückhaltemittel gesichert gehalten wird, die das Zierelement (5, 5a, 5b) zurückhalten, wobei diese Zurückhaltemittel, die in dem ersten und dem zweiten Hohlraum (9, 9a, 9b) verborgen sind, Folgendes sind:
- elastisch verformbar und unter Spannung stehend oder
- mit dem ersten (7a) oder dem zweiten (7b) Befestigungsteil in Eingriff stehend, so dass sie das Zierelement (5, 5a, 5b) entlang seiner Länge unter Spannung setzen, das so gegen die zu verzierende Zone (300) gepresst wird.

2. Elektrohaushaltsgerät (1) nach Anspruch 1, **dadurch gekennzeichnet, dass** die Zurückhaltemittel elastisch verformbar sind, wobei der erste (7a) und der zweite (7b) Befestigungsteil mindestens eine Öffnung (8) umfassen, die es den Zurückhaltemitteln ermöglicht, das Zierelement (5, 5a, 5b) um die zu verzierende Zone (300) gespannt zu halten.

3. Elektrohaushaltsgerät (1) nach einem der Ansprüche 1 oder 2, **dadurch gekennzeichnet, dass** die Zurückhaltemittel eine Feder (10) umfassen, die in dem ersten oder dem zweiten Hohlraum (9, 9a, 9b) verborgen ist, wobei die Feder (10) Haken (100) an jedem ihrer Enden umfasst, die jeweils mit mindestens einer Öffnung (8) des ersten (7a) und des zweiten (7b) Befestigungsteils in Eingriff stehen.

4. Elektrohaushaltsgerät (1) nach Anspruch 1, **dadurch gekennzeichnet, dass** die in Eingriff stehenden Zurückhaltemittel das Zierelement entlang seiner Länge unter Spannung setzen, wobei der erste (7a) Befestigungsteil, der in den ersten Hohlraum (9a) eingefügt wird, eine erste Klaue (70a) umfasst, die von einem einfachen Anschlag (71) zurückgehalten wird, der in dem ersten Hohlraum (9a) verborgen ist, um einem Zug (T) standzuhalten, der durch das Einfügen einer zweiten Klaue (70b) des zweiten (7b) Befestigungsteils ausgeübt wird, der unter Spannung durch Eingriff zwischen gestuften Rasten (11) in dem zweiten Hohlraum (9b) gesichert wird.

5. Elektrohaushaltsgerät (1) nach Anspruch 1, **dadurch gekennzeichnet, dass** die in Eingriff stehenden Zurückhaltemittel das Zierelement entlang seiner Länge unter Spannung setzen, wobei der erste (7a) Befestigungsteil eine Öffnung (8) umfasst, die von einem Haken (110) zurückgehalten wird, der in dem ersten Hohlraum (9a) verborgen ist, um einem Zug (T) standzuhalten, der durch das Einfügen einer zweiten Klaue (70b) des Befestigungsteils ausgeübt wird, der unter Spannung durch Eingriff zwischen gestuften Rasten (11) in dem zweiten Hohlraum (9b) gesichert wird.

6. Elektrohaushaltsgerät (1) nach Anspruch 1, **dadurch gekennzeichnet, dass** die in Eingriff stehenden Zurückhaltemittel das Zierelement entlang seiner Länge unter Spannung setzen, wobei der erste (7a) Befestigungsteil mindestens eine Öffnung (8) umfasst, die von einem Haken (110) zurückgehalten wird, der in dem ersten Hohlraum (9a) verborgen ist, um einem Zug (T) standzuhalten, der von dem zweiten (7b) Befestigungsteil ausgeübt wird, der mindestens eine Öffnung umfasst, der unter Spannung durch Eingriff mit einem Haken in dem zweiten Hohlraum (9b) gesichert wird.

7. Elektrohaushaltsgerät (1) nach Anspruch 1, **dadurch gekennzeichnet, dass** die in Eingriff stehenden Zurückhaltemittel das Zierelement entlang seiner Länge unter Spannung setzen, wobei der erste (7a) Befestigungsteil, der in den ersten Hohlraum (9a) eingefügt wird, eine erste Klaue (70a) umfasst, die von einem einfachen Anschlag (71) zurückgehalten wird, der in dem ersten Hohlraum (9a) verborgen ist, um einem Zug (T) standzuhalten, der von dem zweiten (7b) Befestigungsteil ausgeübt wird, der mindestens eine Öffnung (8) umfasst, der unter Spannung durch Eingriff mit einem Haken (110) in dem zweiten Hohlraum (9b) gesichert wird.

8. Elektrohaushaltsgerät (1) nach einem der Ansprüche 4 oder 5, **dadurch gekennzeichnet, dass** die zweite Klaue (70b) sich an der Stelle einer Zone (27b) des Zierelements (5a, 5b) befindet, die elastisch biegsam ist und die durch Reaktion auf Druck (29a) auf einen Teil (30b) des Körpers (3) gegen die gestuften Rasten (11) gepresst wird.

9. Elektrohaushaltsgerät (1) nach Anspruch 8, **dadurch gekennzeichnet, dass** die biegsame Zone (27b) des Zierelements (5a, 5b), wo sich die zweite Klaue (70b) befindet, ein gefalztes Ende (270b) aufweist, durch das Druck (29b) ausgeübt wird.

10. Elektrohaushaltsgerät (1) nach Anspruch 8, **dadurch gekennzeichnet, dass** die biegsame Zone (27b) des Zierelements (5a, 5b), wo sich die zweite Klaue (70b) befindet, ein im Wesentlichen gerades Ende (271b), das gegen einen Teil (30b) des Körpers (3) drückt, an der Stelle einer in Bezug auf die Richtung (20) der Stufung der Rasten (11) im Wesentlichen parallelen oder schrägen Wand (310) aufweist.

11. Elektrohaushaltsgerät (1) nach Anspruch 10, **dadurch gekennzeichnet, dass** der Teil (30b) des Körpers (3), gegen den das im Wesentlichen gerade Ende (271b) drückt, ein aufgesetztes Stück ist, das die gestuften Rasten (11) umfasst.

12. Elektrohaushaltsgerät (1) nach einem der vorhergehenden Ansprüche, **dadurch gekennzeichnet, dass** die zu verzierende Zone (300) des Körpers (3) zur Außenseite hin konvex ist und die Biegsamkeit des Zierelements (5a, 5b) so eingerichtet ist, dass es sich dieser Konvexität anpasst, wenn es um diese Zone (300) herum angeordnet und gesichert wird.

13. Elektrohaushaltsgerät (1) nach einem der vorhergehenden Ansprüche, **dadurch gekennzeichnet, dass** der Körper (3) an der Stelle oder in unmittelbarer Nähe des ersten und des zweiten Hohlraums (9a, 9b) zur Außenseite (311) hin auf einer Dicke in der Größenordnung des Zierelements (5, 5a, 5b) an der Stelle gewölbt ist, so dass das um den Körper (3) gesicherte eingebrachte Zierelement (5a, 5b) im Wesentlichen mit der Wölbung (311) bündig ist.

14. Elektrohaushaltsgerät (1) nach einem der Ansprüche 4 oder 5 oder 7 oder 8 oder 9 oder 10, **dadurch gekennzeichnet, dass** die erste und die zweite Klaue (70a, 70b) zu dem Zierelement (5a, 5b) gehören und zueinander quer gerichtet sind.

15. Elektrohaushaltsgerät (1) nach einem der Ansprüche 1, 3 bis 10, **dadurch gekennzeichnet, dass** der erste Hohlraum (9a) auf der Außenseite in der Richtung (20) offen ist, die den ersten und den zweiten Befestigungsteil (7a, 7b) des Zierelements (5a, 5b) verbindet, und eine Form einer Ablenkplatte (23) aufweist, die um eine in Bezug auf die Richtung (20) quere Wand (25) verläuft und hinter der die erste Klaue (70a) verborgen ist und entlang der Richtung (20) eingefügt ist und durch Drehung in Eingriff gebracht werden kann.

16. Elektrohaushaltsgerät (1) nach einem der Ansprüche 4 oder 5 oder 7 bis 10 oder 14 oder 15, **dadurch gekennzeichnet, dass** die erste und die zweite verborgene Klaue (70a, 70b) mit dem Zierelement (5a, 5b) einstückig sind und die zweite Klaue (70b) ein Knick dieses Elements ist.

## Claims

1. Household electrical appliance (1) comprising a body (3), first and second cavities (9, 9a, 9b) which open to the outside of the body (3), and at least one decorative element (5, 5a, 5b) that is elongate and arranged around a zone (300) of the said body (3) that is to be decorated, **characterized in that** the said decorative element is flexible (5, 5a, 5b) and has two opposite ends along its elongation which comprise a first (7a) and a second (7b) attachment part which are engaged respectively in the first or second cavity (9, 9a, 9b), the first (7a) or second (7b) attachment part being maintain immobilized inside the cavity (9, 9a, 9b) by retaining means retaining the decorative element (5, 5a, 5b), these retaining means, hidden in the first and second cavities (9, 9a, 9b) being:
- elastically deformable and under tension; or
- engaged with the first (7a) or second (7b) attachment part in such a way as to tension along the length thereof the decorative element (5, 5a, 5b) thus pressed towards the zone (300) that is to be decorated.

2. Household electrical appliance (1) according to Claim 1, **characterized in that** the retaining means are elastically deformable, the first (7a) and second (7b) attachment parts comprising at least one opening (8) allowing the retaining means to keep the decorative element (5, 5a, 5b) taut around the zone (300) that is to be decorated.

3. Household electrical appliance (1) according to one of Claims 1 and 2, **characterized in that** the retaining means comprise a spring (10) hidden in the first or second cavity (9, 9a, 9b), the said spring (10) comprising hooks (100) at each of its ends, each one engaged with at least one opening (8) of the first (7a) and second (7b) attachment parts.

4. Household electrical appliance (1) according to Claim 1, **characterized in that** the engaged retaining means tension the decorative element along its length, the first (7a) attachment part fitted into the first cavity (9a) comprises a first tab (70a) retained by a simple stop (71) hidden in the first cavity (9a) so as to resist the pull (T) exerted by the fitting of a second tab (70b) of the second attachment part (7b) immobilized under tension by engagement between staggered notches (11) in the second cavity (9b).

5. Household electrical appliance (1) according to Claim 1, **characterized in that** the engaged retaining means tension the decorative element along its length, the first (7a) attachment part comprises an opening (8) retained by a hook (110) hidden in the first cavity (9a) so as to resist the pull (T) exerted by the fitting of a second tab (70b) of the attachment part immobilized under tension by engagement between staggered notches (11) in the second cavity (9b).

6. Household electrical appliance (1) according to Claim 1, **characterized in that** the engaged retaining means tension the decorative element along its length, the first attachment part (7a) comprises at least one opening (8) retained by a hook (110) hidden in the first cavity (9a) so as to resist the pull (T) exerted by the second attachment part (7b) which comprises at least one opening immobilized under tension by engagement with a hook in the second cavity (9b).

7. Household electrical appliance (1) according to Claim 1, **characterized in that** the engaged retaining means tension the decorative element along its length, the first attachment part (7a), fitted into the first cavity (9a), comprises a first tab (70a) retained by a simple stop (71) hidden in the first cavity (9a) so as to resist the pull (T) exerted by the second attachment part (7b) which comprises at least one opening (8) immobilized under tension by engagement with a hook (110) in the second cavity (9b).

8. Household electrical appliance (1) according to one of Claims 4 and 5, **characterized in that** the second tab (70b) is situated at a zone (27b) of the decorative element (5a, 5b) which is elastically flexible and urged towards the staggered notches (11) by reaction to pressure (29a) against a part (30b) of the body (3).

9. Household electrical appliance (1) according to Claim 8, **characterized in that** the flexible zone (27b) of the decorative element (5a, 5b) at which the second tab (70b) is located has a bent-over end (270b) via which said pressure (29b) is exerted.

10. Household electrical appliance (1) according to Claim 8, **characterized in that** the flexible zone (27b) of the decorative element (5a, 5b) at which the second tab (70b) is situated has a substantially straight end (271b) which presses against a part (30b) of the body (3) at the location of a wall (310) that is substantially parallel, or oblique, to the direction (20) in which the notches (11) are staggered.

11. Household electrical appliance (1) according to Claim 10, **characterized in that** the part (30b) of the body (3) against which the said substantially straight end (271b) presses is an attached component that comprises the staggered notches (11).

12. Household electrical appliance (1) according to one of the preceding claims, **characterized in that** the zone (300) of the body (3) that is to be decorated is convex outwards and the flexibility of the decorative element (5a, 5b) is tailored such that it espouses this convexness when arranged and immobilized around this zone (300).

13. Household electrical appliance according to one of the preceding claims, **characterized in that** at or in the immediate vicinity of the first and second cavities (9a, 9b), the body (3) bulges outwards (311) over a thickness of the order of that of the decorative element (5, 5a, 5b) at this point, so that, immobilized around the body (3), the attached decorative element (5a, 5b) lies substantially flush with the said bulge (311).

14. Household electrical appliance (1) according to one of Claims 4 or 5 or 7 or 8 or 9 or 10, **characterized in that** the first and second tabs (70a, 70b) belong to the decorative element (5a, 5b) and are directed transversely relative to one another.

15. Household electrical appliance (1) according to one of Claims 1, 3 to 10, **characterized in that** the first cavity (9a) is open to the outside in the direction (20) connecting the first and second attachment parts (7a, 7b) of the decorative element (5a, 5b) and has a chicane shape (23) which runs around a wall (25) that is transverse with respect to the said direction (20) and behind which the first tab (70a) is hidden and fitted in the said direction (20) and can be engaged through rotation.

16. Household electrical appliance (1) according to one of Claims 4 or 5 or 7 to 10 or 14 or 15, **characterized in that** the first and second hidden tabs (70a, 70b) are of one piece with the decorative element (5a, 5b) and the second tab (70b) is a fold of this element.
